# EUROPEAN PATENT SPECIFICATION

(11) **EP 0 716 010 B1**
(45) Date of publication and mention of the grant of the patent: **17.02.1999**
(21) Application number: 95117588.4
(22) Date of filing: 08.11.1995
(51) Int. Cl.: B62M 23/02, H02K 5/10

(54) **Waterproof structure of motor for electrically-driven vehicle**
Wasserdichte Motorstruktur für elektrisch angetriebenes Fahrzeug
Structure étanche à l'eau d'un moteur pour véhicule entraîné électriquement

(30) Priority: 07.12.1994 JP 331227/94
(43) Date of publication of application: 12.06.1996
(73) Proprietor: HONDA GIKEN KOGYO KABUSHIKI KAISHA, Minato-ku Tokyo (JP)
(72) Inventor: Igarashi, Masashi, c/o K.K. Honda Gijutsu, Wako-shi, Saitama (JP); Yahagi, Kunio, c/o K.K. Honda Gijutsu Kenkyusho, Wako-shi, Saitama (JP); Honda, Satoshi, c/o K.K. Honda Gijutsu Kenkyusho, Wako-shi, Saitama (JP); Nakazawa, Yoshihiro, c/o K.K. Honda Gijutsu, Wako-shi, Saitama (JP)
(74) Representative: Liska, Horst, Dr.-Ing.

(56) References cited:
- EP-A- 0 536 441
- DE-A- 4 304 504
- US-A- 4 871 042

## Description

The present invention relates to a driving motor device for use in an electrically-driven vehicle such as a motor-assisted bicycle.

Japanese Patent Laid-open No. 5-319104 discloses a bicycle with a motor provided below a seat with a motor shaft extending in a vertical direction. Such a motor for this kind of use adopts a completely closed structure using an O-ring and a sealing member, so as to prevent early wearing of brushes due to deposition of water to the brushes.

The motor of the completely closed type as mentioned above requires a highly accurate sealing structure to cope with internal pressure changes due to self-heating or ambient temperature fluctuations. Accordingly, high-precision machining, sealing parts, and a sealing check step in the manufacture of the motor are necessary, resulting in a high cost for the motor. It is accordingly an object of the present invention to provide a motor for an electrically-driven vehicle which can eliminate the need for a closed structure and can therefore be manufactured at a low cost.

DE 43 04 504 A1 discloses a waterproof structure for a motor having a motor shaft extending in a vertical direction whereby an electric power supply mechanism is provided at an upper portion of said motor, said electric power supply mechanism having a brush provided in an upper portion in the inside of a motor case and a terminal inserted through said upper portion of said motor case to supply electric power to said brush; a waterproof sealing member is interposed between said terminal and said motorcase.

EP 536 441 A1 discloses a drain hole formed through a lower portion of a motor case.

According to the present invention, there is provided a driving motor device for an electrically driven vehicle comprising a mounting portion for mounting the driving motor device between a front wheel and a rear wheel of the vehicle; a motor having a motor shaft extending in a vertical direction, an electric power supply mechanism provided at an upper portion of said motor, said electric power supply mechanism having a brush provided in an upper portion of a motor case and a terminal inserted through said upper portion of said motor case to supply electric power to said brush; a waterproof sealing member interposed between said terminal and said motor case, a drain hole formed through a lower portion of said motor case, and a labyrinth structure formed at the mounting portion for draining water leaving the drain hole.

The brush is provided in the upper portion of the motor case, and the terminal is inserted through the upper portion of the motor case. Furthermore, the waterproof sealing member is interposed between the terminal and the motor case. With this arrangement, a portion of the electric power supply mechanism inside the motor case is hardly exposed to water from the lower portion of the motor, and this portion can be effectively water-sealed by the waterproof sealing member only that is provided in the upper portion of the motor case.

On the other hand, the drain hole is formed through the lower portion of the motor case. Accordingly, even if water enters the motor through between the motor shaft and the motor case, the water is quickly drained from the drain hole. As a result, a conventional waterproof sealing member used between the motor shaft and the motor case can be eliminated. The labyrinth structure prevents water from entering into the motor case through the drain hole.

Furthermore, the conventional waterproof sealing member used between the motor shaft and the motor case is expensive because it is applied to a sliding portion. Accordingly, the present invention can eliminate such an expensive waterproof sealing member and can therefore adopt an open structure different from the conventional closed structure. As a result, the needs for high-precision machining and a sealing check step in the manufacture of the motor can also be eliminated to thereby greatly reduce the cost.

### BRIEF DESCRIPTION OF THE DRAWINGS

FIG. 1 is a side view of a bicycle with a motor according to a preferred embodiment of the present invention.

FIG. 2 is a side view of an essential part of the preferred embodiment.

FIG. 3 is a cross section taken along the line 3-3 in FIG. 2.

FIG. 4 is a vertical sectional view of the motor according to the preferred embodiment.

FIG. 5 is a plan view of an essential part of the preferred embodiment.

FIG. 6 is a cross section taken along the line 6-6 in FIG. 5.

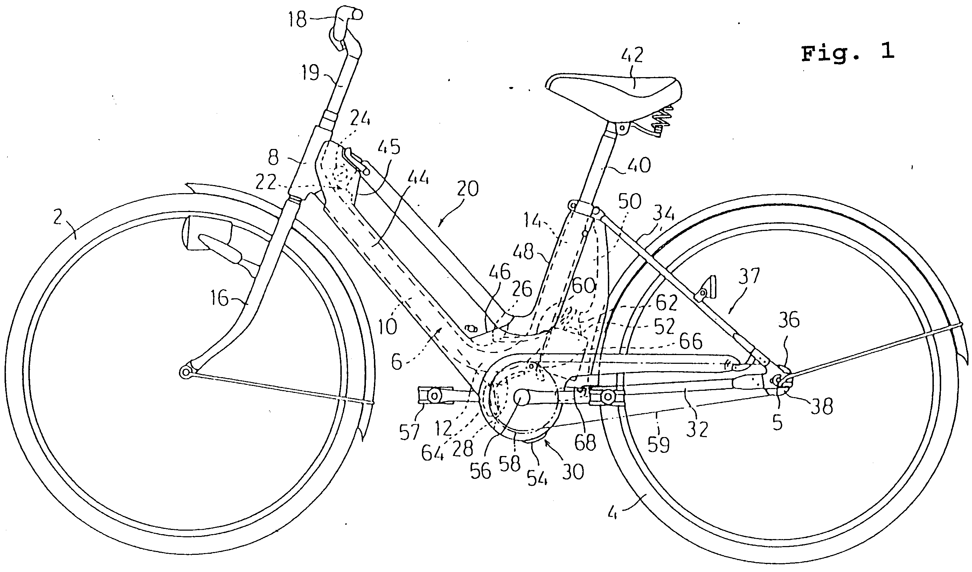

A preferred embodiment of the present invention is shown in FIGS. 1 to 6. FIG. 1 is a side view of a bicycle with a motor used as an auxiliary power according to the preferred embodiment. The bicycle is provided with a front frame 6 having a V-shape as viewed in side elevation, between a front wheel 2 and a rear wheel 4. The front frame 6 has a main frame 10 extending linearly rearward from a head pipe 8 so as to be inclined downward, an intermediate portion 12 extending rearward from the main frame 10 so as to be curved upward, and a seat frame 14 extending upward from the intermediate portion 12 so as to be inclined rearward.

A front fork 16 having lower ends for supporting the front wheel 2 and a steering post 19 having an upper end for mounting a handle 18 are rotatably supported to the head pipe 8. A battery case 20 for storing a battery to be hereinafter described is removably mounted on the main frame 10 so as to extend between a front fixing portion 22 and a rear connector 26 as a male connector provided on the motor side. The battery case 20 has a length substantially equal to the length of the main frame 10. Reference numeral 24 denotes a locking device.

An auxiliary power device 30 is supported through a hanger plate 28 to the intermediate portion 12. A rear fork 32 is mounted at its front end to the auxiliary power device 30 and extends rearward substantially horizontally. A pair of right and left rear stays 34 extend rearward from the upper end of the seat frame 14 so as to be inclined downward. The rear ends of the rear fork 32 and the rear ends of the rear stays 34 are connected together to brackets 36, thus forming a rear frame 37. An axle 5 of the rear wheel 4 and a driven sprocket 38 are rotatably supported to the brackets 36.

A saddle seat 42 is supported through a seat post 40 to the upper end of the seat frame 14. The front frame 6 and the auxiliary power device 30 are surrounded by a body cover 44. The body cover 44 is composed of right and left separate members. A front end portion of the body cover 44 covers the front fixing portion 22 and a front end portion of the battery case 20. The front end portion of the body cover 44 has a slant surface fitted with a slant wall 45 formed at the front end portion of the battery case 20. The slant wall 45 extends so as to be inclined downward.

A rear end portion of the battery case 20 is formed with a slant wall 46 extending so as to be inclined upward. The slant wall 46 is fitted with a slant surface formed at a rear end portion of the body cover 44. A portion of the body cover 44 in front of the seat frame 14 is formed with an opening, and this opening is closed by a front panel 48.

The auxiliary power device 30 is provided with a control unit 50, a motor 52, and a transmission 54. A crankshaft 56 as an output shaft of the transmission 54 is rotated integrally with a driving sprocket 58 to rotate the driven sprocket 38 of the rear wheel 4 through a chain 59.

A pair of pedals 57 are mounted on the crankshaft 56 so that the crankshaft 56 is driven by human power applied to the pedals 57. At this time, the motor 52 is driven by electric power supplied from the battery stored in the battery case 20, thereby assisting the human power driving the crankshaft 56. The control unit 50 controls the operation of the motor 52 according to the torque applied to the pedals 57 and the number of revolutions of the driving sprocket 58.

As schematically shown, the battery in the battery case 20 and the control unit 50 are connected by lead wires 60, and the control unit 50 and terminals (to be hereinafter described) of the motor 52 are connected by lead wires 62.

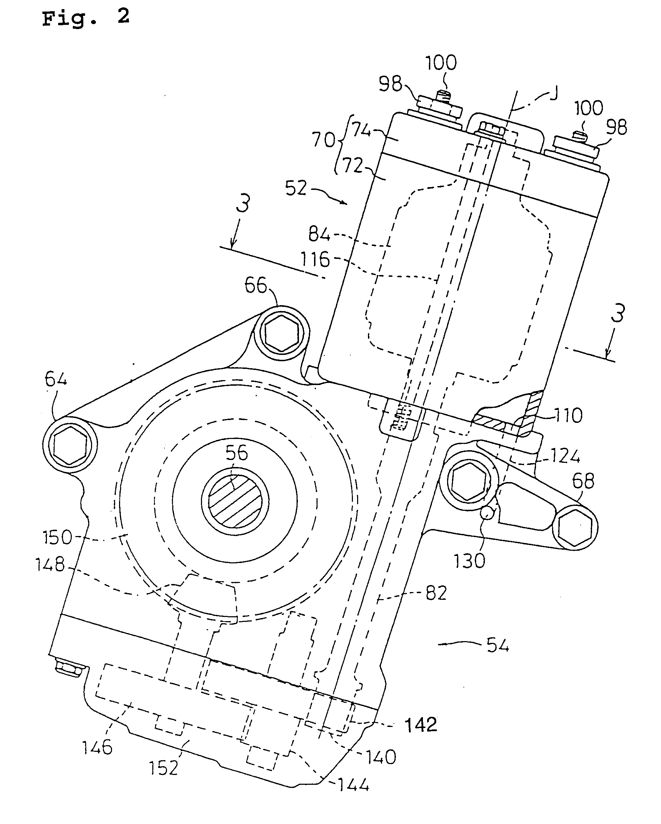

The axis J (see FIG. 2) of a motor shaft of the motor 52 extends vertically so as to be inclined substantially in parallel to the seat frame 14 (see FIG. 1). The transmission 54 has front mounting portions 64 and 66 mounted on the intermediate portion 12 of the front frame 6 on the front side of the motor 52, and also has a rear mounting portion 68 on the rear side of the motor 52, for mounting the front end of the rear fork 32.

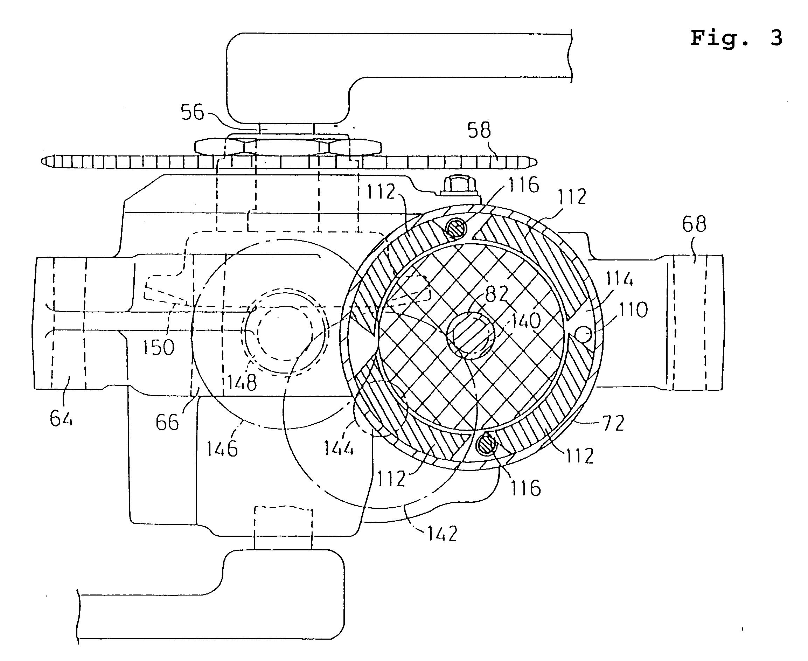

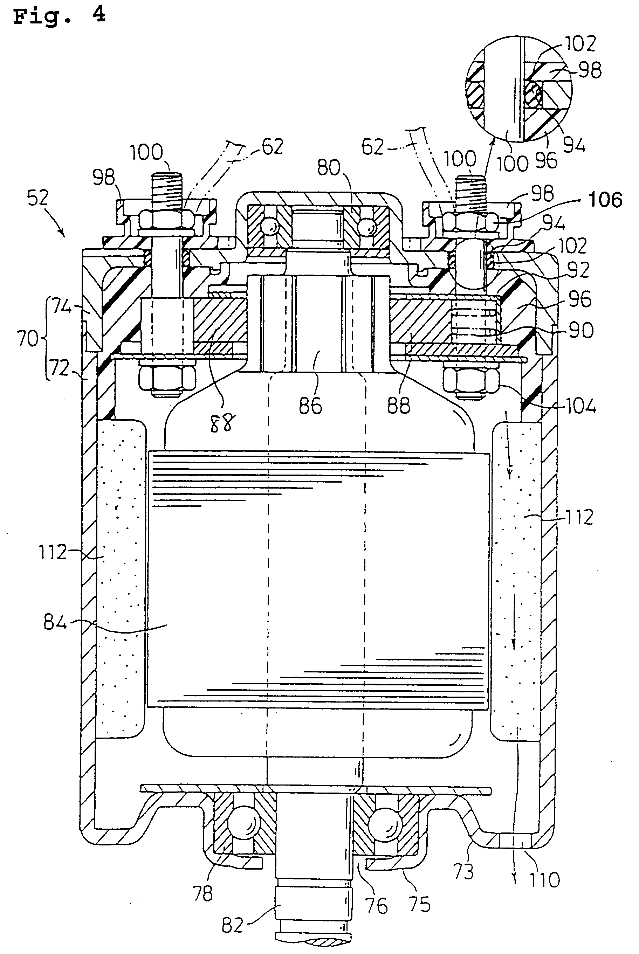

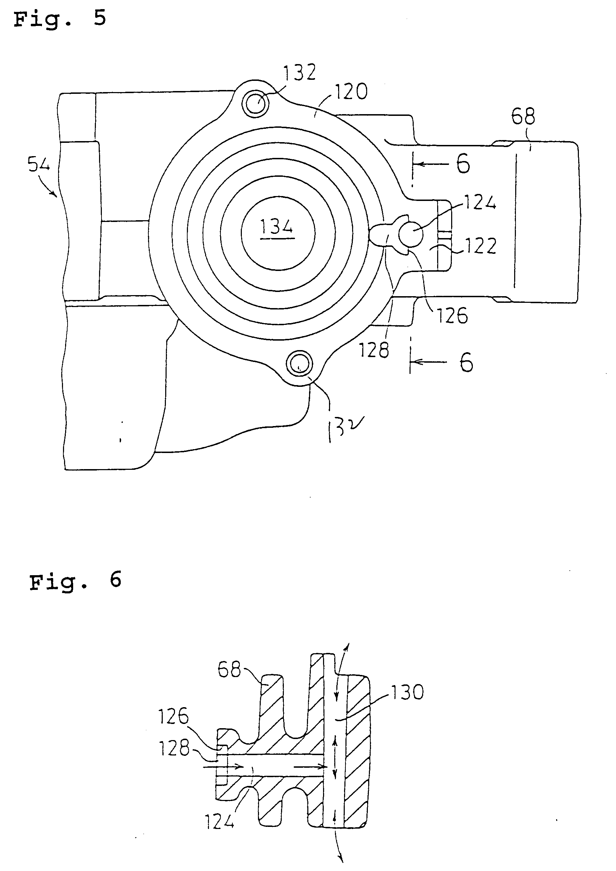

FIG. 2 is a side view of the motor 52 and the transmission 54; FIG. 3 is a horizontal cross section taken along the line 3-3 in FIG. 2; FIG. 4 is a vertical sectional view of the motor 52; FIG. 5 is a plan view showing a motor mounting seat of the transmission 54; and FIG. 6 is a cross section taken along the line 6-6 in FIG. 5.

Referring to FIGS. 2 to 6, a motor case 70 of the motor 52 consists of a substantially cylindrical lower portion 72 and a cap 74. The lower portion 72 has a bottom 73. The bottom 73 is formed at its central portion with a bearing holder 75 and a shaft hole 76 at the center of the bearing holder 75. A bearing 78 is provided around the shaft hole 76. Another bearing 80 is provided at a central portion of the cap 74.

A motor shaft 82 of the motor 52 is rotatably supported by the bearings 78 and 80. The axis J (see FIG. 2) of the motor shaft 82 extends vertically so that the upper side of the axis J is inclined rearward. A rotor 84 is mounted on the motor shaft 82 in a central portion of the motor case 70.

As apparent from FIG. 4, a commutator 86 is provided on an upper end portion of the motor shaft 82, and brushes 88 are pressed on the commutator 86 by springs 90. The brushes 88 are supported within a brush holder 92. The brush holder 92 is fixed to the cap 84 by terminals 100 inserted through terminal holes 94 of the cap 74 and insulating members 96 and 98 provided inside and outside the cap 74.

A gap between each terminal 100 and the cap 74 is water-sealed by an O-ring 102 fitted in each terminal hole 94. Each terminal 100 is secured at its upper and lower end portions by nuts 104 and 106. The lead wires 62 extending from the control unit 50 are mounted on the upper end portions of the terminals 100, respectively.

The bottom 73 of the lower portion 72 is formed with an annular recessed portion surrounding the bearing holder 75. The recessed portion is formed at its rear side with a drain hole 110. Since the motor 52 is inclined rearward as a whole, the position of the drain hole 110 is the lowermost position of the motor case 70. The drain hole 110 communicates with a water passage 114 defined between the adjacent ones of plural stator magnets 112 provided around the rotor 84.

As apparent from FIG. 3, the plural stator magnets 112 are arranged on a circle and are circumferentially spaced at given intervals in such a manner that there are defined a plurality of spaces each between the circumferential opposed ends of the adjacent stator magnets 112, for forming the water passage 114 and for inserting two mounting bolts 116 (see FIGS. 2 and 3) for mounting the motor 52.

As shown in FIG. 5, reference numeral 120 denotes a mounting seat of the transmission 54 for mounting the motor 52. The mounting seat 120 is formed at its outer circumferential portion with a mounting portion 122 for mounting a portion of the bottom 73 where the drain hole 110 is formed. The mounting portion 122 is formed with a vertical hole 124 communicating with the drain hole 110.

A semicircular recess 126 and a radial recess 128 extending from the semicircular recess 126 in the radially inward direction of the mounting seat 120 are formed in the vicinity of the vertical hole 124 so as to communicate with the inlet of the vertical hole 124. The formation of these recesses 125 and 128 is intended to widen the area of a connecting portion between the drain hole 110 and the vertical hole 124.

As shown in FIGS. 6 and 2, the vertical hole 124 communicates at its outlet with a horizontal hole 130 formed in a thick-walled portion of the mounting portion 68 so as to intersect the vertical hole 124 at right angles. The horizontal hole 130 extends through the mounting portion 68 in its transverse direction. Further, the horizontal hole 130 is slightly tapered from its one end to the other end (see FIG. 6), so as to quickly drain the water having entered the motor case 70.

In FIG. 5, reference numerals 132 denote tapped holes for mounting the front or lower ends of the mounting bolts 116, and reference numeral 134 denotes a motor shaft hole for inserting the motor shaft 82.

Referring again to FIG. 2, the motor 52 is mounted on the transmission 54 by the mounting bolts 116, and the motor shaft 82 extends through the shaft hole 76 (see FIG. 4) and the motor shaft hole 134 (see FIG. 5) into the transmission 54. An output gear 140 is formed at the front or lower end of the motor shaft 82. The output gear 140 meshes with an upper-stage gear 142 of two-stage idle gears provided in the vicinity of the bottom of the transmission 54. A lower-stage gear 144 of the two-stage idle gears meshes with an intermediate gear 146.

A driving bevel gear 148 coaxial with the intermediate gear 146 is in mesh with a driven bevel gear 150. The driven bevel gear 150 is connected through a one-way clutch (not shown) to the crankshaft 56, thus assisting a human driving power input to the crankshaft 56. In FIG. 2, reference numeral 152 denotes a bottom cap for the transmission 54.

The operation of the preferred embodiment will now be described. Even when water falls on the upper portion of the motor 52, the water is prevented from entering the motor case 70 because the terminal holes 94 of the cap 74 through which the terminals 100 are inserted are sealed by the O-rings 102. Further, even when water enters the lower portion of the motor 52, the water hardly reaches the upper portion of the motor 52.

A brush mechanism including the brushes 88, the springs 90, and the brush holder 92 is provided in the upper portion of the motor 52, and the brush mechanism is water-sealed by the O-rings 102 only, thereby preventing the brushes 88 from being exposed to water.

Further, the space is defined between the adjacent stator magnets 112 to form the water passage 114 vertically extending. Accordingly, even if water enters the motor case 70, the water is quickly drained through the water passage 114 and the drain hole 110 to the vertical hole 124. Accordingly, deposition of water to the surface of each stator magnet 112 can be prevented. In particular, freezing of the water on the surface of each stator magnet 112 can be prevented. Further, the water is splashed about by the rotation of the rotor 84 to prevent deposition of the water on the brushes 88.

Further, the vertical hole 124 and the horizontal hole 130 form a labyrinth structure. Accordingly, even when the lower portion of the motor 52 is exposed to water, for example, in washing the vehicle, the water mostly passes through the horizontal hole 130 and hardly enters the vertical hole 124.

In addition, even if water enters the motor case 70 through the horizontal hole 130 and the vertical hole 124, the water having entered the motor case 70 is quickly drained through the vertical hole 124 because the vertical hole 124 extends vertically. Accordingly, the water is hard to deeply penetrate in the motor case 70 toward the upper portion thereof.

Thus, the structure of the motor 52 can be formed as an open structure with the exposure of water to the brushes 88 being prevented. Accordingly, it is possible to eliminate the needs for high-precision machining, any expensive waterproof sealing member for a sliding portion between the motor shaft 82 and the motor case 70, and a sealing check step in the manufacture of the motor. Therefore, the motor for the electrically-driven vehicle can be provided at a low cost.

Summarized it is an object of the invention to make a driving motor device with a waterproof structure of a motor simple and reliable.

Brushes 88 are provided in an upper portion of a motor case 70 of a motor 52. Terminals 100 connected to the brushes 88 are inserted through a cap 74 of the motor case 70. An inserted portion between each terminal 100 and the cap 74 is sealed by an O-ring 102. On the other hand, a drain hole 110 is formed through the bottom of a lower portion 72 of the motor case 70. Even with an open structure such that no waterproof seal is provided at a portion of the lower portion 72 through which a motor shaft 82 is inserted, the brushes 88 can be water-sealed by the O-rings 102 only. Further, water having entered the lower portion 72 from the bottom can be quickly drained from the drain hole 110.

## Claims

1. Driving motor device for an electrically driven vehicle comprising a mounting portion (68) for mounting the driving motor device between a front wheel (2) and a rear wheel (4) of the vehicle; a motor (52) having a motor shaft (82) extending in a vertical direction, an electric power supply mechanism (88, 100) provided at an upper portion of said motor (52), said electric power supply mechanism having a brush (88) provided in an upper portion of a motor case (70) and a terminal (100) inserted through said upper portion of said motor case (70) to supply electric power to said brush (88);
a waterproof sealing member (102) interposed between said terminal (100) and said motor case (70), a drain hole (110) formed through a lower portion (72) of said motor case (70), and a labyrinth structure (124, 130) formed at the mounting portion (68) for draining water leaving the drain hole (110).

## Patentansprüche

1. Antriebsmotorvorrichtung für ein elektrisch angetriebenes Fahrzeug, umfassend einen Montageabschnitt (68) zum Montieren der Antriebsmotorvorrichtung zwischen einem Vorderrad (2) und einem Hinterrad (4) des Fahrzeugs; einen Motor (52) mit einer in vertikaler Richtung verlaufenden Motorwelle (82), einen Stromversorgungsmechanismus (88, 100), der an einem oberen Abschnitt des Motors (52) vorgesehen ist, wobei der Stromversorgungsmechanismus eine in einem oberen Abschnitt eines Motorgehäuses (70) vorgesehene Bürste (88) sowie einen durch den oberen Abschnitts des Motorgehäuses (70) eingesetzten Anschluß (100) zur Stromversorgung der Bürste (88) aufweist;
wobei ein wasserdichtes Dichtelement (102) zwischen dem Anschluß (100) und dem Motorgehäuse (70) angeordnet ist, ein Ablaufloch (110) einen unteren Abschnitt (72) des Motorgehäuses (70) durchsetzt und eine Labyrinthstruktur (124, 130) an dem Montageabschnitt (68) ausgebildet ist, um das Ablaufloch (110) verlassendes Wasser abzuleiten.

## Revendications

1. Dispositif moteur d'entraînement pour un véhicule à entraînement électrique, comprenant une partie de montage (68) destinée à monter le dispositif moteur entraînement entre une roue avant (2) et une roue arrière (4) du véhicule; un moteur (52) ayant un arbre moteur (82) s'étendant en direction verticale, un mécanisme d'alimentation en puissance électrique (88, 100) prévu sur la partie supérieure dudit moteur (52), ledit mécanisme d'alimentation en puissance électrique ayant un balai (88) prévu dans une partie supérieure d'un carter moteur (70) et une borne (100) insérée à travers ladite partie supérieure dudit carter moteur (70) pour fournir une puissance électrique audit balai (88);
un organe d'étanchéité étanche à l'eau (102), interposé entre ladite borne (100) et ledit carter moteur (70), un trou de drain (110), formé dans une partie inférieure (72) dudit carter moteur (70), et une structure labyrinthe (124, 130) formée sur la partie de montage (68), en vue de drainer l'eau quittant le drain (110).
